# EUROPÄISCHE PATENTANMELDUNG

(11) **EP 3 483 490 A1**
(43) Veröffentlichungstag der Anmeldung: **15.05.2019**
(21) Anmeldenummer: 18205436.1
(22) Anmeldetag: 09.11.2018
(51) Int. Cl.: F16K 27/00, B22F 3/105, B22F 5/10, F15B 13/08, B22F 3/00

(54) **HYDRAULIK-BAUEINHEIT UND HERSTELLUNGSVERFAHREN FÜR EINE HYDRAULIK-BAUEINHEIT**

(30) Priorität: 09.11.2017 DE 102017126296
(71) Anmelder: Tries GmbH & CO. KG, 89584 Ehingen (DE)
(72) Erfinder: Tries, Matthias, 89584 Ehingen (DE)
(74) Vertreter: Otten, Roth, Dobler & Partner mbB Patentanwälte

(57) **Zusammenfassung**

Vorgeschlagen wird eine Hydraulik-Baueinheit (1) zum Aufbau einer Hydraulikschaltung, umfassend wenigstens zwei nicht-additiv gefertigten Hydraulikkomponenten (2, 3, 3A, 3B, 4) mit jeweils wenigstens einem Anschluss zum Anschließen einer Hydraulikleitung, welche gegossen und/oder spanend gefertigt sind. Zur Bauraumoptimierung ist wenigstens ein additiv gefertigtes Verbindungselement (5 bis 8, 20 bis 23) zur Verbindung von wenigstens zwei der nicht-additiv gefertigten Hydraulikkomponenten (2, 3, 3A, 3B, 4) vorgesehen, welches durch ein additives Fertigungsverfahren (3D-Druckverfahren) an die wenigstens zwei verbundenen, nicht-additiv gefertigten Hydraulikkomponenten (2, 3, 3A, 3B, 4) hergestellt ist. Zudem wird ein Herstellungsverfahren vorgeschlagen.

## Beschreibung

Die Erfindung betrifft eine Hydraulik-Baueinheit zum Aufbau einer Hydraulikschaltung nach dem Oberbegriff des Anspruchs 1, eine Hydraulik-Baueinheit nach dem Oberbegriff des Anspruchs 12 sowie ein Verfahren zur Herstellung einer Hydraulik-Baueinheit nach dem Oberbegriff des Anspruchs 9.

Aus dem Stand der Technik ist aus der DE 101 45 070 B4 ein Verfahren zur Fertigung eines Ventils bekannt, bei dem Methoden der sogenannten additiven Fertigungstechnik eingesetzt werden. Dabei wird das Ventilgehäuse schichtweise aufgebaut.

Aufgabe der Erfindung ist es, beim Aufbau einer Hydraulikschaltung den Bauraum optimieren zu können.

Die Aufgabe wird, ausgehend von einer Hydraulik-Baueinheit der eingangs genannten Art, durch die kennzeichnenden Merkmale der Ansprüche 1 bzw. 12, sowie ferner durch die kennzeichnenden Merkmale des Anspruchs 9 in Bezug auf ein Herstellungsverfahren gelöst.

Durch die in den abhängigen Ansprüchen genannten Maßnahmen sind vorteilhafte Ausführungen und Weiterbildung der Erfindung möglich.

Die erfindungsgemäße Hydraulik-Baueinheit dient zum Aufbau einer Hydraulikschaltung, insbesondere eines Steuer- bzw. Ventilblocks, der wenigstens zwei Hydraulikkomponenten mit wenigstens einem Anschluss zum Anschließen einer oder mehrerer Hydraulikleitungen umfasst. Die Hydraulikkomponenten wie vorzugsweise Ventilgehäuse oder dergleichen sind dabei zunächst in einem separaten Prozess zuvor hergestellt worden, etwa in einem Gießprozess oder durch spanende Bearbeitung und werden anschließend bzw. nachträglich in der Hydraulik-Baueinheit verbaut, um dann später eine Funktion in der Hydraulikschaltung übernehmen zu können. Diese Hydraulikkomponenten können zum Beispiel zusammen mit den inneren Ventilkomponenten bzw. den Ventilkörpern, -dichtungen oder dergleichen als fertige Komponenten zugekauft werden, um in der Hydraulik-Baueinheit verbaut werden zu können.

Nunmehr zeichnet sich die erfindungsgemäße Hydraulik-Baueinheit dadurch aus, dass wenigstens ein Verbindungselement zur Verbindung von wenigstens zwei der Hydraulikkomponenten durch ein additives Fertigungsverfahren hergestellt wird, und zwar so, dass dieses Verbindungselement an die wenigstens zwei zu verbindenden Hydraulikkomponenten heranreicht und an diesen Hydraulikkomponenten unmittelbar, d.h. im Kontakt mit den entsprechenden Hydraulikkomponenten hergestellt wird.

Als additives Fertigungsverfahren kann in besonders vorteilhafter Weise ein 3-D-Druck-Verfahren eingesetzt werden. Zunächst kann durch diese Maßnahme eine Bauraumoptimierung vorgenommen werden. Wird eine Hydraulikschaltung, insbesondere ein Steuer- bzw. Ventilblock nach herkömmlicher Methodik aufgebaut, so wird etwa an eine bestehende Hydraulikkomponente ein Verbindungselement angebaut, das wiederum mit einer weiteren Hydraulikkomponente oder weiteren Verbindungselementen seinerseits verbunden werden kann. Um eine solche Montage zu bewerkstelligen, wird jedoch auch entsprechender Bauraum benötigt, da die einzelnen Elemente und Komponenten sonst nicht oder nur schwer montiert werden können. Mit der vorliegenden Erfindung ist es jedoch möglich, den Bauraum zu optimieren, indem etwa die benötigten Hydraulikkomponenten angeordnet werden und die Verbindungselemente so platziert werden, dass ein möglichst kleiner Bauraum benötigt wird, da nicht noch zusätzlicher Platz benötigt wird, um das Verbindungselement an eine bestimmten Stelle zu transportieren. Darüber hinaus ist es auch möglich, eine Optimierung unter weiteren Kriterien durchzuführen, indem zum Beispiel nicht nur der Bauraum, sondern auch der Strömungsverlauf verbessert wird. Durch einen optimierten Strömungsverlauf können Energieverluste verringert werden.

Insgesamt kann somit auch eine Optimierung in Bezug auf das Gewicht stattfinden, da kürzere Verbindungselemente im Allgemeinen auch weniger Material benötigen. Möglich wird dies, indem Teile der Hydraulikschaltung bzw. der Steuerblock oder Ventilblock additiv gefertigt werden, d.h. es wird schichtweise gefertigt, und es muss in Bezug auf den vorhandenen Platz keine Rücksicht darauf genommen werden, dass möglicherweise ein anderes, bereits zuvor installiertes Verbindungselement den Zugang zu der Stelle innerhalb der zu bauenden Hydraulik-Baueinheit versperren könnte, an der ein Verbindungselement als fertiges Bauteil installiert werden soll. Denn ein additives Fertigungsverfahren legt bei einer schichtweisen Aufbringung des Fertigungsmaterials gewissermaßen einen Schnitt in einer Ebene durch den gesamten Aufbau und baut parallel unterschiedliche Elemente auf. Grundsätzlich wird aber jedes Bauteil der Hydraulik-Baueinheit entweder vollständig zur Verfügung gestellt und muss nicht im Einzelnen zusammengebaut werden (fertige Hydraulikkomponente), oder es wird mit Hilfe eines additiven Fertigungsverfahrens bei Bau der Hydraulik-Baueinheit hergestellt (Verbindungselement).

Dadurch, dass im Grunde lediglich Verbindungselemente und nicht die eigentlichen Hydraulikkomponenten additiv gefertigt bzw. gedruckt werden müssen, sind die Herstellungskosten relativ gering, da vergleichsweise aufwendige Hydraulikkomponenten wie zum Beispiel Ventile nicht in diesem Prozess additiv gefertigt werden bzw. bereits als Fertigteile bereits zur Verfügung stehen. Dadurch, dass komplexere Hydraulikkomponenten bei diesem additiven Fertigungsverfahren nicht berücksichtigt werden müssen bzw. nicht selbst in diesem Verfahrensschritt hergestellt werden, kann auch die Fertigungsgeschwindigkeit deutlich erhöht werden.

Bei entsprechender Anordnung der bereits vorhandenen Hydraulikkomponenten kann eine fertige Baueinheit entstehen. Insbesondere müssen etwa bei Anwendung eines additiven Fertigungsverfahrens wie einem 3-D-Druck keine Gewinde oder Passstücke nachgearbeitet werden. Diese können auch unmittelbar an die Hydraulikkomponenten gedruckt und somit an die Formgebung angepasst werden, d.h. es wird kein zusätzlicher Bauraum benötigt, um die entsprechenden Verbindungselemente innerhalb der Hydraulik-Baueinheit einzubringen. Letzten Endes werden somit auch Kosten eingespart.

Die Steuer- bzw. Ventilblöcke können in vielfacher Weise variiert werden, indem zum Beispiel ein modularer Aufbau von Einzelteilen, entweder Einzelblöcken bzw. einer Zusammensetzung mehrerer Blöcke verwendet wird. Somit eignet sich die erfindungsgemäße Hydraulik-Baueinheit bzw. ein entsprechendes Herstellungsverfahren auch besonders dazu, in einer Kleinstserienfertigung angewandt zu werden, da mit diesem Verfahren geringe Kosten verbunden sind. Vor allem eignet sich diese Methode gemäß der Erfindung zur Prototypenherstellung besonders gut, da eine Hydraulikschaltung oder Teile der Hydraulikschaltung bzw. Steuerblöcke/Ventilblöcke am Rechner konstruiert werden können und die sich ergebende Schaltung unmittelbar durch ein additives Fertigungsverfahren hergestellt werden kann. Beispielsweise wird die Schaltung bzw. die Baueinheit, die etwa als CAD-Graphik vorliegt, unmittelbar auf einen 3-D-Drucker geleitet, sodass dort sogleich eine Prototypenfertigung vorgenommen wird. Grundsätzlich eignet sich ein solches Verfahren aber auch für eine Fertigung großer Stückzahlen.

Insbesondere kommen grundsätzlich zwei Arten von Verbindungselementen in Betracht, die bei Ausführungsformen der Erfindung implementiert werden können, nämlich Verbindungsleitungen, durch welche die Hydraulikflüssigkeit fließen kann, aber auch für Verbindungsstege, welche zur Stabilisierung dienen. Darüber hinaus können auch Verbindungselemente etwa in Form von Passstücken als Adapter zur Herstellung einer fluidleitenden Verbindung zwischen Hydraulikkomponenten hergestellt und verwendet werden. Im Einzelnen hängt die Wahl dieser Komponenten davon ab, zwischen welchen Komponenten eine Fluidleitung hergestellt werden soll und wie diese im Raum anzuordnen ist. Ein Passstück kann z.B. eine direkte, geradlinige Verbindung zwischen zwei Hydraulikkomponenten herstellen. Ein Steg erhöht in der Regel die Stabilität der Baueinheit bzw. ermöglicht eine stabile Verbindung zwischen einer Hydraulikkomponente und/oder eines Verbindungselements, da die Baueinheit zum Beispiel auch in eine Hydraulikschaltung als bestehendes Modul eingesetzt werden kann, können zusätzlich zwischen einzelnen Komponenten auch Verbindungsstege eingesetzt werden.

In vorteilhafter Weise kann zwischen Hydraulikleitungen bzw. Hydraulikkomponenten die Verbindungsstrecke in Bezug auf ihre Weglänge optimiert werden, d.h. die Verbindungsstrecken können möglichst kurz sein. Ist dieses Ziel erreicht und ist der Block insgesamt dann strömungsoptimiert bzw. materialoptimiert, kann sodann die Stabilität durch zusätzliche Stege erhöht werden.

Das additive Fertigungsverfahren bringt es grundsätzlich immer mit sich, dass die Bauteile an sich erst in ihren Bestandteilen schichtweise aufgebaut werden. Um somit die Fertigung komplizierter Teile ausklammern zu können, können diese Hydraulikkomponenten wie zum Beispiel Ventilgehäuse als Fertigteile zugekauft werden. Beispielsweise können diese als einzelne Stücke durch spannende Bearbeitung hergestellt werden und in vorteilhafter Weise einen Ventilsitz für einen Ventilkörper umfassen. Dies ermöglicht in vorteilhafter Weise, dass als Hydraulikkomponenten solche verwendet werden können, die hinsichtlich des Qualitätsstandards höherwertiger ausgebildet sind als solche, die mit einem 3-D Druckverfahren hergestellt werden können. Gemäß der Erfindung kann hiermit z.B. kostengünstig eine exakte Ventilfunktion bei hoher Fertigungsgenauigkeit des Ventilsitzes realisiert werden.

Auch ist es somit einfacher, Hydraulikkomponenten zu verwenden, die für Spezialanwendungen hergestellt worden sind und gegebenenfalls nicht ohne weiteres im 3D-Druck-Verfahren produziert werden können. Eine auf diese Art und Weise hergestellt Hydraulik-Baueinheit kann insbesondere zur Herstellung von Prototypen sehr gut eingesetzt werden, da auf schnelle und kostengünstige Weise auch mehrere Versuchsmodelle für Tests realisiert werden können.

Bei der Weiterbildung der Erfindung können alle Hydraulikkomponenten und Verbindungselemente miteinander fest verbunden sein. Eine derartige Ausführungsform eignet sich insbesondere, wenn die Baueinheit als kompaktes Modul innerhalb eines modularen Aufbaus einer Hydraulikschaltung verwendet werden soll. Unter einer festen Verbindung kann im Sinne der Erfindung verstanden werden, dass die Bauteile nicht lösbar miteinander verbunden sind. Insbesondere sind Bauteile vorgegebener Hydraulik-Komponenten so mit Verbindungselementen verbunden, dass diese an die Hydraulikkomponenten über ein additives Fertigungsverfahren angebrachten Verbindungselemente nicht mehr lösbar, insbesondere nicht zerstörungsfrei lösbar mit diesen zusammenhängen. Auch sind Verbindungselemente untereinander gegebenenfalls nicht lösbar mit weiteren Verbindungselementen verbunden. Hiermit können besonders stabile bzw. steife Baueinheiten gemäß der Erfindung verwirklicht werden.

Im Sinne der Erfindung kann eine feste Verbindung auch bedeuten, dass entsprechende Hydraulikkomponenten und Verbindungselemente, gegebenenfalls auch Verbindungselemente untereinander, etwa über Gewinde oder Muffen miteinander verbunden sind, die zumindest teilweise durch das additive Fertigungsverfahren ebenfalls hergestellt wurden, sodass eine feste, aber lösbare Verbindung entsteht bzw. vorliegt. Auf diese Art und Weise kann eine solche Hydraulik-Baueinheit, wie sie als Weiterbildung der Erfindung vorgesehen ist, als komplettes Modul in eine Hydraulikschaltung eingefügt werden. Insofern die Hydraulik-Baueinheit etwa als Steuerblock oder Ventilblock dienen soll, ist in vorteilhafter Weise wenigstens eine der Hydraulikkomponenten als Ventilgehäuse ausgebildet. Die Baueinheit kann somit in vorteilhafter Weise als Schalteinheit bzw. Schaltmodul innerhalb einer Hydraulikschaltung dienen, wobei in vorteilhafter Weise ein Ventil bzw. Ventilkörper in die Hydraulikkomponente bzw. in das Ventilgehäuse eingebracht/eingesetzt wird.

Vorteilhafterweise ist ein Gehäuse zur Aufnahme und Positionierung/Fixierung von Stellelementen und/oder Ventilen und/oder Ventilkörpern von Ventilen vorgesehen, wobei das Gehäuse zumindest das additiv gefertigte Verbindungselement und die wenigstens zwei nicht-additiv gefertigten Hydraulikkomponenten und/oder wenigstens zwei nicht-additiv gefertigte Ventilgehäuse zweier Ventile umfasst. Dementsprechend wird gemäß der Erfindung das Gehäuse in vorteilhafter als ein "Konglomerat-Gehäuse" bzw. "Hybrid-Gehäuse" verwirklicht, das als einstückige Baueinheit vorzugsweise aus zwei verschieden gefertigten Komponenten/Elementen besteht, nämlich aus nicht-additiv gefertigten Hydraulikkomponenten und zugleich aus additiv gefertigten Komponenten bzw. den Verbindungselementen.

In das (einstückige) Gehäuse bzw. "Konglomerat-Gehäuse"/"Hybrid-Gehäuse" werden in vorteilhafter Weise noch Ventilkörper bzw. innere Ventilkomponenten in die Ventilgehäuse eingesetzt bzw. angeordnet, so dass in vorteilhafter Weise im fertigen bzw. betriebsbereiten Zustand die Baueinheit das erfindungsgemäße Gehäuse sowie diverse Ventile und ggf. Elastomerdichtungen wie O-Ringe oder dergleichen umfasst. Grundsätzlich können Ventildichtungen bzw. Elastomerdichtungen als additiv gefertigte Dichtungen verwirklicht/vorgesehen werden, insbesondere auch in einem gemeinsamen Zwei-Komponenten-3-D-Druckprozess mit den erfindungsgemäßen Verbindungselementen.

Gemäß der Erfindung zeichnet sich ein Verfahren zur Herstellung einer Hydraulik-Baueinheit dadurch aus, dass zunächst wenigstens zwei vorgefertigte Hydraulikkomponenten bereitgestellt werden, die jeweils wenigstens einen Anschluss zum Anschließen einer Hydraulikleitung aufweisen. Diese werden vorpositioniert, d.h. es wird ihnen eine feste Position im Raum zugeordnet. Grundsätzlich kann, zum Beispiel durch eine Simulation, die Hydraulik-Baueinheit entworfen werden, d.h. es werden in vorteilhafter Weise die Verbindungselemente so verteilt, dass möglichst wenig Material zum Bau der Einheit benötigt wird, dass die Strömungsverläufe mit möglichst geringem Flusswiderstand arbeiten bzw. eine möglichst direkte Verbindung zur Leitung des Fluids hergestellt werden kann. Eine solche Simulation wird in der Regel als erster Schritt vorgenommen, wenn die Funktion der Baueinheit und etwaige Randbedingungen zu deren Verwendung bekannt sind.

Insbesondere kann die Verteilung der Verbindungselemente auch so erfolgen, dass die Herstellung der Baueinheit überhaupt erst möglich ist. Denkbar ist im Übrigen auch, dass zunächst nur ein Teil der Hydraulikkomponenten an einer festen Position im Raum angeordnet wird (in der Simulation oder der eigentlichen Fertigung), dann ein additives Fertigungsverfahren zur Herstellung von Verbindungselementen angewendet oder simuliert wird, anschließend wiederum eine oder mehrere Hydraulikkomponenten angeordnet werden usw..

In vorteilhafter Weise können wenigstens zwei der Hydraulikkomponenten bei einer Ausführungsform der Erfindung über ein Verbindungselement, insbesondere über einen Verbindungssteg zu Erhöhung der Stabilität oder über eine Verbindungsleitung bzw. beim Passstück zur Herstellung einer leitenden Verbindung miteinander verbunden werden. Dabei können die Hydraulikkomponenten als vorgefertigte Bauteile vorliegen, sodass im Grunde die einfachen Bauteile wie Leitungen oder Stege zur Erhöhung der Stabilität hinzugefügt werden können.

Je nach Anforderungen an die Hydraulik-Baueinheit bzgl. Druck, Korrosionsbeständigkeit usw. können bei Ausführungsformen der Erfindung beim additiven Fertigungsverfahren Kunststoff bzw. auch Stahl eingesetzt werden.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1:: eine schematische Seitenansicht einer Hydraulik-Baueinheit gemäß der Erfindung,
- Figur 2:: eine schematische Schrägansicht der Hydraulik-Baueinheit aus Figur 1, sowie
- Figur 3:: eine schematische Darstellung eines Herstellungsverfahrens zur Herstellung einer Hydraulik-Baueinheit gemäß der Erfindung.

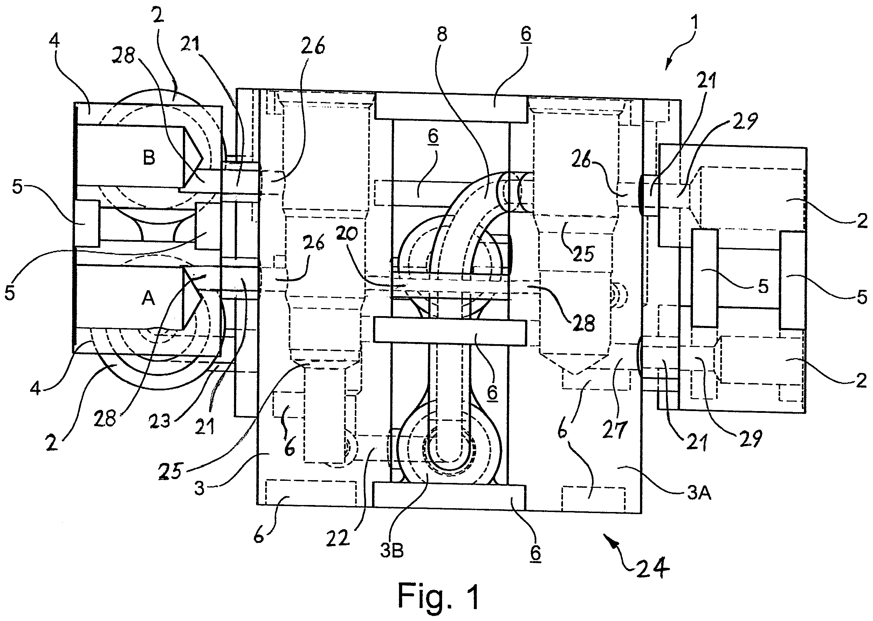

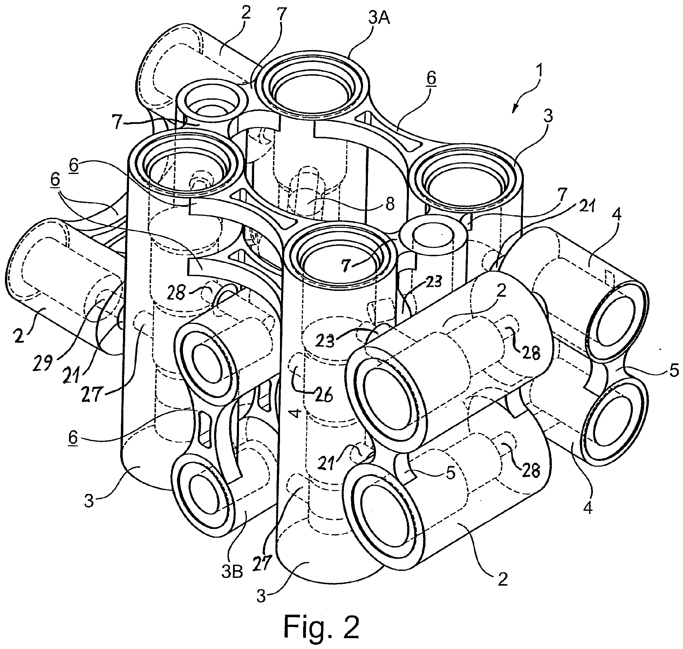

Die Figuren 1 und 2 zeigen jeweils eine Hydraulik-Baueinheit 1 in Seiten- sowie in Schrägansicht. Sämtliche Hydraulikkomponenten 2, 3, 3A, 3B, 4, die als Ventilgehäuse 2, 3, 3A, 3B, 4 ausgebildet sind, sind vorgefertigt und werden vor der Zusammenstellung und Fertigung der Hydraulik-Baueinheit 1 in vorteilhafter Weise spanend mit einer Werkzeugmaschine, insbesondere CNC-Werkzeugmaschine hergestellt. Die Hydraulikkomponenten 2, 3, 3A, 3B, 4 bzw. die Ventilgehäuse 2, 3, 3A, 3B, 4 weisen beispielsweise vorteilhafte Ventilsitze für einen nicht näher dargestellten Ventilkörper bzw. für innere Ventilkomponenten/-einsätze auf. Gemäß der Erfindung kann hiermit z.B. kostengünstig eine exakte Ventilfunktion bei hoher Fertigungsgenauigkeit des Ventilsitzes realisiert werden.

Zur Erhöhung der Stabilität sind zwischen den Hydraulikkomponenten 2, 3, 3A, 3B, 4 erfindungsgemäße Verbindungselemente in Form von Stegen 5, 6, 7 eingefügt. Zwei Hydraulikkomponenten 3A, 3B sind über ein Verbindungselement in Form einer Verbindungsleitung 8, 20 bis 23 miteinander verbunden. Auch die Verbindungsleitung 8, 20 bis 23 kann für zusätzliche Stabilität sorgen. Die Hydraulik-Baueinheit 1 stellt somit ein fertiges Modul 24 bzw. Steuerblockgehäuse 24 für den (modularen) Aufbau einer Hydraulikschaltung dar.

Das Steuerblockgehäuse 24 besteht somit gemäß der Erfindung einerseits aus additiv gefertigten Verbindungselementen 5 bis 8, 20 bis 23 und andererseits aus nicht-additiv gefertigten Hydraulikkomponenten 2, 3, 3A, 3B, 4, wobei letztere als nicht-additiv gefertigte Ventilgehäuse 2, 3, 3A, 3B, 4 entsprechender Ventile ausgebildet ist. Somit handelt es sich gemäß der Erfindung beim Steuerblockgehäuse 24 um ein "Konglomerat-Gehäuse" bzw. "Hybrid-Gehäuse", das als einstückige Baueinheit 1 vorzugsweise aus zwei verschiedenen gefertigten Komponenten/Elementen besteht, nämlich aus nicht-additiv gefertigten Komponenten und zudem auch aus additiv gefertigten Komponenten. In dieses einstückige Steuerblockgehäuse 24 bzw. "Konglomerat-Gehäuse"/"Hybrid-Gehäuse" werden in vorteilhafter Weise noch Ventilkörper bzw. innere Ventilkomponenten in die Ventilgehäuse eingesetzt/angeordnet, so dass im fertigen bzw. betriebsbereiten Zustand die Baueinheit diverse Ventile und Steuerblockgehäuse 24 umfasst.

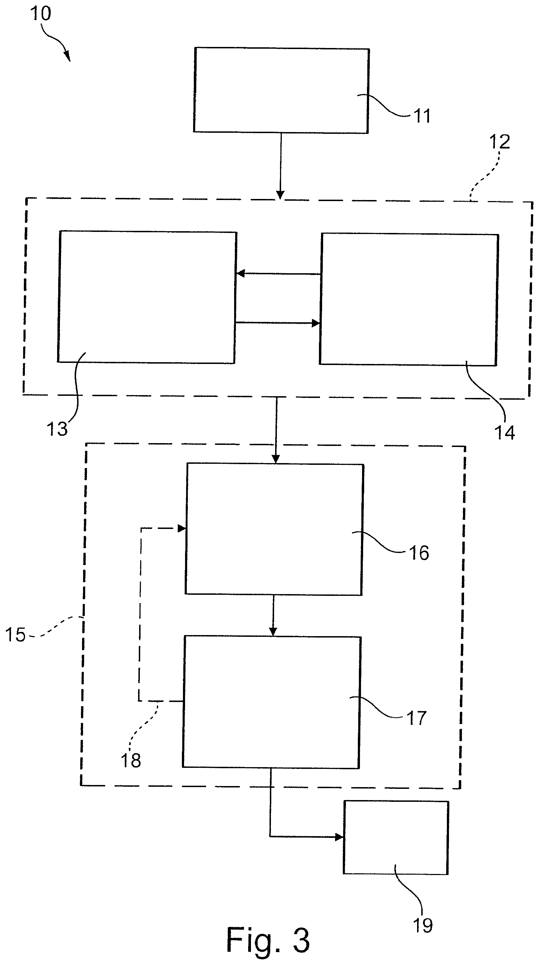

Figur 3 zeigt eine schematische Darstellung, wie ein Herstellungsverfahren 10 gemäß der Erfindung realisiert werden kann: Ausgangspunkt ist die Bereitstellung 11 einer Hydraulikschaltung bzw. einer Funktionsvorgabe für ein in einer Hydraulikschaltung zu integrierendes Modul bzw. eine zu integrierende Hydraulik-Baueinheit. Hierfür werden insbesondere im Rahmen der Bereitstellung 11 benötigte Hydraulikkomponenten vorgegeben, wie zum Beispiel eines Ventilgehäuses eines Ventils, insbesondere eines Wegeventils, Druckbegrenzungsventils, Rückschlagventils oder dergleichen. Im Rahmen einer Simulation 12 wird die Anordnung der einzelnen Bestandteile innerhalb der Baueinheit ausprobiert und/oder bestimmt. Zum einen werden Hydraulikkomponenten (13), zum anderen werden Verbindungselemente (Stege, Verbindungsleitungen, Passstücke usw.) positioniert (14). Der Doppelpfeil zwischen den Positionierungsvorgängen 13, 14 deutet an, dass dieser Vorgang im Wechsel als Einzelschritte erfolgen kann, d.h. es erfolgt eine simulierte Positionierung einer Hydraulikkomponente, dann eines Verbindungselement 8, 20 bis 23, anschließend einer weiteren Hydraulikkomponente 2, 3, 3A, 3B, 4 usw..

Gegebenenfalls kann auch eine Positionierung wieder verändert werden, d.h. eine Hydraulikkomponente 2, 3, 3A, 3B, 4 oder Verbindungselement 8, 20 bis 23 werden z.B. an eine andere Stelle verschoben. Eine entsprechende Hydraulik-Baueinheit 1, 24 kann zum einen hinsichtlich ihrer Bestandteile, also hinsichtlich der Position der Hydraulikkomponenten 2, 3, 3A, 3B, 4 und Verbindungselemente 8, 20 bis 23 so gestaltet werden, dass sie möglichst platzsparend ist. Dennoch müssen verschiedene Vorgaben und auch Randbedingungen bei dieser Simulation 12 erfüllt werden. Zunächst einmal müssen alle für die Funktion der Hydraulik-Baueinheit 1 notwendigen Fluidleitungen zwischen einzelnen Hydraulikkomponenten oder Hydraulikleitungen 8, 20 bis 23 hergestellt werden, damit die Baueinheit 1, 24 grundsätzlich in der geplanten Hydraulikschaltung betrieben werden kann.

Da die Hydraulikkomponenten 2, 3, 3A, 3B, 4 in der Regel vorgegeben sind, müssen diese einen bestimmten Platz einnehmen, und es ist auch notwendig, dass an den Stellen, an denen Anschlüsse 26 bis 29 und/oder die Ein- bzw. Ausgänge 26 bis 29 der Hydraulikkomponenten 2, 3, 3A, 3B, 4 liegen, auch ausreichend Platz vorherrscht. Die niedrigste Priorität bei der Simulation besitzen in der Regel Verbindungselemente 5 bis 8, 20 bis 23 in Form von Stegen 5, 6, 7, da diese zwar dafür sorgen, dass eine ausreichende Stabilität der Baueinheit 24 als Modul 24 gegeben ist. Die Stege können ansonsten jedoch keine weitere Funktion erfüllen und sie können somit flexibel dort eingesetzt werden, wo sie notwendig und auch einsetzbar sind. Die Simulation kann beispielsweise von einer Hydraulikkomponente 2, 3, 3A, 3B, 4 ausgehen und entsprechend die weiteren Verbindungselemente und Hydraulikkomponenten 2, 3, 3A, 3B, 4 hinzufügen.

Eine weitere Randbedingung bei der Simulation ist es, dass ein 3D-Druck der Verbindungselemente möglich sein muss. Dies bedeutet, dass beim Drucken der Verbindungselemente ausreichend Platz für diesen 3-D-Druckvorgang vorhanden sein muss. Denkbar ist auch, dass andere additive Fertigungsverfahren eingesetzt werden. Ist dies geschehen, kann die eigentliche Fertigung 15 beginnen. im Verfahrensschritt 16 eine Hydraulikkomponente oder gegebenenfalls auch alle Hydraulikkomponenten platziert werden. Anschließend werden im 3-D-Druckverfahren im Schritt 17 Verbindungselemente an die Hydraulikkomponenten gedruckt. Es ist denkbar, dass im Schritt 16 bereits alle Hydraulikkomponenten vorplatziert werden. Ist dies nicht der Fall (da nicht zweckmäßig oder nicht möglich) und muss zwischen dem Platzieren zweiter Hydraulikkomponenten ein 3-D-Druck-Vorgang zwischengeschoben werden, weil ansonsten zum Beispiel nicht ausreichend Platz vorliegt, so wird eine weitere Hydraulikkomponente erst wieder nach Beendigen eines Teilschritt des 3D-Druckvorgangs platziert. Dies ist durch den Sprung 18 vom Schritt 17 auf Schritt 16 zurück dargestellt. Schließlich kann nach Fertigstellen der Baueinheit diese im Schritt 19 überprüft bzw. in eine Hydraulikschaltung eingefügt werden.

### Bezugszeichenliste

- 1: Hydraulik-Baueinheit
- 2: Hydraulikkomponente (Ventilgehäuse)
- 3: Hydraulikkomponente (Ventilgehäuse)
- 3A: Hydraulikkomponente (Ventilgehäuse)
- 3B: Hydraulikkomponente (Ventilgehäuse)
- 4: Hydraulikkomponente (Ventilgehäuse)
- 5: Verbindungselement (Steg)
- 6: Verbindungselement (Steg)
- 7: Verbindungselement (Steg)
- 8: Verbindungselement (Leitung)

- 10: Herstellungsverfahren
- 11: Bereitstellung von Hydraulikkomponenten
- 12: Simulation
- 13: Positionierung von Hydraulikkomponenten (Simulation)
- 14: Positionierung / Gestaltung von Verbindungselementen (Simulation)
- 15: Fertigung
- 16: Platzierung von Hydraulikkomponenten (Fertigung)
- 17: 3D-Druck von Verbindungselementen (Fertigung)
- 18: Wiederholungsschritt (Fertigung)
- 19: Einbindung in Hydraulikschaltung / Test
- 20: Verbindungselement (Leitung)
- 21: Verbindungselement (Leitung)
- 22: Verbindungselement (Leitung)
- 23: Verbindungselement (Leitung)
- 24: Steuerblockgehäuse
- 25: Ventilsitz
- 26: Anschluss
- 27: Anschluss
- 28: Anschluss
- 29: Anschluss

## Patentansprüche

1. Hydraulik-Baueinheit (1) zum Aufbau einer Hydraulikschaltung, insbesondere Steuer- und/oder Ventilblock, umfassend wenigstens zwei durch ein nichtadditives Fertigungsverfahren, insbesondere nicht durch ein 3D-Druckverfahren, gefertigte Hydraulikkomponenten (2, 3, 3A, 3B, 4) mit jeweils wenigstens einem Anschluss zum Anschließen einer Hydraulikleitung, welche gegossen und/oder spanend gefertigt sind, **dadurch gekennzeichnet, dass** wenigstens ein Verbindungselement (5 bis 8, 20 bis 23) zur Verbindung von wenigstens zwei der nicht-additiv gefertigten Hydraulikkomponenten (2, 3, 3A, 3B, 4) vorgesehen ist, welches durch ein additives Fertigungsverfahren, insbesondere durch ein 3D-Druckverfahren, an die wenigstens zwei verbundenen, nicht-additiv gefertigten Hydraulikkomponenten (2, 3, 3A, 3B, 4) hergestellt ist.

2. Hydraulik-Baueinheit (1) nach einem der vorgenannten Ansprüche, **dadurch gekennzeichnet, dass** das additiv gefertigte Verbindungselement (5 bis 8, 20 bis 23) und/oder wenigstens eines der additiv gefertigten Verbindungselemente (5 bis 8, 20 bis 23) als nicht-additiv gefertigter Verbindungssteg (5 bis 8, 20 bis 23) zum Verbinden von wenigstens zwei der nicht-additiv gefertigten Hydraulikkomponenten (2, 3, 3A, 3B, 4) und/oder zum Verbinden von wenigstens einer der zwei nicht-additiv gefertigten Hydraulikkomponenten und der Hydraulikleitung (8, 20 bis 23) ausgebildet ist.

3. Hydraulik-Baueinheit (1) nach einem der vorgenannten Ansprüche, **dadurch gekennzeichnet, dass** das additiv gefertigte Verbindungselement (5 bis 8, 20 bis 23) und/oder wenigstens eines der additiv gefertigten Verbindungselemente (5 bis 8, 20 bis 23) als additiv gefertigte Verbindungsleitung (8, 20 bis 23) zur Leitung von Hydraulikfluid zwischen wenigstens zwei der nicht-additiv gefertigten Hydraulikkomponenten (2, 3, 3A, 3B, 4) und/oder zwischen wenigstens einer der zwei nicht-additiv gefertigten Hydraulikkomponenten und der Hydraulikleitung ausgebildet ist.

4. Hydraulik-Baueinheit (1) nach einem der vorgenannten Ansprüche, **dadurch gekennzeichnet, dass** das additiv gefertigte Verbindungselement (5 bis 8, 20 bis 23) und/oder wenigstens eines der additiv gefertigten Verbindungselemente (5 bis 8, 20 bis 23) als ein Passstück und/oder als Adapter zur Herstellung einer fluidleitenden Verbindung zwischen der entsprechenden nicht-additiv gefertigten Hydraulikkomponente und der Hydraulikleitung und/oder Verbindungsleitung (8, 20 bis 23) ausgebildet ist.

5. Hydraulik-Baueinheit (1) nach einem der vorgenannten Ansprüche, **dadurch gekennzeichnet, dass** wenigstens eine der nicht-additiv gefertigten Hydraulikkomponenten (2, 3, 3A, 3B, 4), insbesondere alle nicht-additiv gefertigte Hydraulikkomponenten, wenigstens teilweise durch eine spanende Werkstückbearbeitung hergestellt ist/sind, insbesondere durch Fräsen und/oder CNC-Fräsen und/oder Drehen und/oder dass wenigstens eines der additiv gefertigten Verbindungselemente (5 bis 8, 20 bis 23) wenigstens teilweise aus Stahl und/oder aus Kunststoff gefertigt/gedruckt ist.

6. Hydraulik-Baueinheit (1) nach einem der vorgenannten Ansprüche, **dadurch gekennzeichnet, dass** alle nicht-additiv gefertigten Hydraulikkomponenten (2, 3, 3A, 3B, 4) und additiv gefertigten Verbindungselemente (5 bis 8, 20 bis 23) miteinander fest verbunden sind.

7. Hydraulik-Baueinheit (1) nach einem der vorgenannten Ansprüche, **dadurch gekennzeichnet, dass** wenigstens eines der nicht-additiv gefertigten Hydraulikkomponenten (2, 3, 3A, 3B, 4) als nicht-additiv gefertigtes Ventilgehäuse (2, 3, 3A, 3B, 4) eines Ventils ausgebildet ist.

8. Hydraulik-Baueinheit (1) nach einem der vorgenannten Ansprüche, **dadurch gekennzeichnet, dass** ein Gehäuse zur Aufnahme und Positionierung/Fixierung von Stellelementen und/oder Ventilen und/oder Ventilkörpern von Ventilen vorgesehen ist, wobei das Gehäuse zumindest das additiv gefertigte Verbindungselement (5 bis 8, 20 bis 23) und die wenigstens zwei nicht-additiv gefertigten Hydraulikkomponenten (2, 3, 3A, 3B, 4) und/oder wenigstens zwei nicht-additiv gefertigte Ventilgehäuse (2, 3, 3A, 3B, 4) zweier Ventile umfasst.

9. Verfahren (10) zur Herstellung einer Hydraulik-Baueinheit (1), insbesondere eines Steuer- und/oder Ventilblocks, **gekennzeichnet durch**:
• Bereitstellung von wenigstens zwei nicht-additiv gefertigten Hydraulikkomponenten (2, 3, 3A, 3B, 4) mit jeweils wenigstens einem Anschluss zum Anschließen einer Hydraulikleitung, und
• Positionierung (13, 16) wenigstens einer der, insbesondere aller nicht-additiv gefertigten Hydraulikkomponenten in einer festen Position innerhalb der herzustellenden Hydraulik-Baueinheit 8, 24) in einer Simulation (12) und/oder in der Fertigung (15), und
• Durchführung eines additiven Fertigungsverfahrens (14, 17), insbesondere eines 3D-Druckverfahrens, an wenigstens zwei der nicht-additiv gefertigten Hydraulikkomponenten zur Herstellung wenigstens eines additiv gefertigten Verbindungselements (5 bis 8, 20 bis 23) zur Verbindung der entsprechenden nicht-additiv gefertigten Hydraulikkomponenten in der Simulation und/oder in der Fertigung, wobei insbesondere die Simulation (12) vor der Fertigung (15) durchgeführt wird.

10. Verfahren (10) nach einem der vorgenannten Ansprüche, **dadurch gekennzeichnet, dass** wenigstens zwei der nicht-additiv gefertigten Hydraulikkomponenten (2, 3, 3A, 3B, 4) über ein additiv gefertigtes Verbindungselement (5 bis 8, 20 bis 23), insbesondere fest über einen additiv gefertigten Verbindungssteg (5, 6, 7) und/oder fluidleitend mit einer additiv gefertigten Verbindungsleitung (8, 20 bis 23) zur Leitung von Hydraulikfluid und/oder zumindest teilweise mit einem additiv gefertigten Passstück, untereinander verbunden werden.

11. Verfahren (10) nach einem der vorgenannten Ansprüche, **dadurch gekennzeichnet, dass** wenigstens eine der nicht-additiv gefertigten Hydraulikkomponenten (2, 3, 3A, 3B, 4), insbesondere alle nicht-additiv gefertigten Hydraulikkomponenten, wenigstens teilweise durch eine spanende Werkstückbearbeitung hergestellt werden, insbesondere durch Fräsen und/oder CNC-Fräsen und/oder Drehen und/oder dass beim 3D-Druckverfahren Stahl und/oder Kunststoff verwendet wird.

12. Hydraulik-Baueinheit (1) zum Aufbau einer Hydraulikschaltung, insbesondere Steuer- und/oder Ventilblock, erhältlich durch ein Verfahren nach einem der vorgenannten Ansprüche.
